# EUROPEAN PATENT SPECIFICATION

(11) **EP 2 599 615 B1**
(45) Date of publication and mention of the grant of the patent: **23.09.2020**
(21) Application number: 12194780.8
(22) Date of filing: 29.11.2012
(51) Int. Cl.: B29C 70/34, B29C 70/54, B29K 105/08

(54) **Reducing porosity in composite structures**
Verringerung der Porosität in Verbundstoffstrukturen
Réduire la porosité dans des structures composites

(30) Priority: 02.12.2011 US 201113309964
(43) Date of publication of application: 05.06.2013
(73) Proprietor: The Boeing Company, Chicago, IL 60606-1596 (US)
(72) Inventor: Ferguson, Kathy Lynn, Woodinville, WA Washington 98072 (US)
(74) Representative: Boult Wade Tennant LLP

(56) References cited:
- EP-B1- 1 128 958
- WO-A1-2008/099207
- FR-A1- 2 870 861
- GB-A- 2 381 493
- JP-A- S 631 514
- US-A1- 2005 059 309
- US-A1- 2010 098 906

## Description

### BACKGROUND INFORMATION

### 1. Field:

The present disclosure relates to a method for reducing porosity in a composite structure.

### 2. Background:

Composite structures may be comprised of layers of composite material. A composite material may be made from two or more different types of materials with different physical and/or chemical properties which may remain separate and distinct within the composite material. Further, when used to form a composite structure, these different physical and/or chemical properties may also remain separate and distinct within the composite structure. Examples of composite materials may include, for example, without limitation, fiber-reinforced polymers, carbon-fiber reinforced plastic, glass-reinforced plastic, a metal composite material, a ceramic composite material, a cermet, a hybrid composite material, and shape memory polymers.

The strength of a composite structure may be based on a number of different factors. These factors may include, for example, without limitation, porosity of the composite structure. The porosity of a structure may be a measure of the void spaces in the structure. In particular, porosity may be represented as a fraction of the volume of void spaces in a structure over a total volume of the structure. The void spaces in a structure may be the empty spaces in the structure. Typically, these empty spaces may be filled with air and/or other types of gases and/or fluids. Void spaces also may be referred to as voids.

When the porosity of a composite structure is outside of selected tolerances, the strength of the composite structure may be less than desirable. In particular, the strength between the different layers of composite material in the composite structure may be less than desirable when the porosity of the composite structure is outside of selected tolerances.

Currently, composite structures formed using pre-impregnated materials may have reduced porosity as compared to composite structures formed using wet layup materials. A pre-impregnated material, also referred to as a prepreg material, may be a material pre-infused with resin. A wet layup process may include applying liquid resin to a dry reinforcement material as the dry reinforcement material is laid up.

Currently available methods for forming composite structures using prepreg materials may result in composite structures with desired porosity. Some wet layup processes may result in a cured composite structure with a higher than desired porosity and/or number of voids.

However, storage and handling of prepreg materials may be more difficult and expensive when compared to wet layup materials. For example, a prepreg material may have a relatively short shelf life. Further, prepreg materials may need to be stored in facilities capable of storage at temperatures below room temperature. Stored prepreg materials may need to be monitored over time to monitor the shelf and working lives of these prepreg materials and/or may require additional maintenance.

Materials used in wet layup processes may have relatively long shelf lives when compared to prepreg materials, because the resin and the dry reinforcement material may be stored separately. Further, wet layup materials may be stored at room temperature for relatively long periods of time. Additionally, wet layup materials may be less expensive than prepreg materials.

Therefore, it would be desirable to have a method and apparatus that takes into account at least some of the issues discussed above, as well as possibly other issues.

EP 1128958, in its abstract, states: "A multi-layered moulding material (1) is described which comprises a layer (2) of resin material and conjoined to at least one surface thereof a fibrous layer (3, 4). A method of forming the multi-layered material (1) is also described."

WO 2008/099207, in its abstract, states: "A method of processing a composite material comprising heating a porous layer (3) in contact with the composite material (1) above its melting point whereby it melts and becomes incorporated into the composite material. The material may be formed by a matrix diffusion process. In this case the porous layer acts as a distribution layer. Alternatively the material may be formed as a stack of prepregs. In this case the porous layer acts as a breather layer. The porous layer may comprise a polysulphone or polyethersulphone which increases the toughness of the material."

US 2010/0098906, in its abstract, states: "Systems and methods for the fabrication of prepregs possessing enhanced ability for the removal of gases from within prepregs and prepreg layups prior to and/or during at least a portion of consolidation and cure process to form composite structures are disclosed. In certain embodiments, perforations of selected configurations may be introduced into the prepregs prior to, during, and after layup. The perforations provide routes for gases trapped within and between the perforated prepregs and prepreg lay-ups to escape during consolidation and cure process, reducing the residual porosity within the resulting composite. For example, composites having residual porosities less than 10 vol. %, on the basis of the volume of the composite, may be achieved in this manner."

US 2005/0059309, in its abstract, states: "Materials and methods are provided for producing preform materials for impact-resistant composite materials suitable for liquid molding. Interlayers formed of nonwoven, continuous fibers, such as spunbonded, spunlaced, or mesh fabric, are introduced between non-crimped layers of unidirectional reinforcing fibers to produce a preform for use in liquid-molding processes to produce a composite member. Curing of the preform provides increased impact resistance by increasing the amount of energy required to propagate localized fractures due to impact.

### SUMMARY

In summary, there is provided a method for reducing porosity in a composite structure, the method comprising: applying a first layer of composite material over a surface, wherein surface is one or more of a wing, a fuselage, a spacecraft; applying a venting layer over the first layer of composite material, wherein the venting layer is formed by fibers arranged in the form of a woven fabric and includes at least one of positioning fabric, fiberglass layer, Buckypaper, a nanomaterial layer, a nylon layer, and a polyester fiber layer; and applying a second layer of composite material over the venting layer in which the first layer of composite material, the venting layer, and the second layer of composite material form a composite layup for the composite structure, wherein the venting layer provides a number of pathways for allowing a number of fluids to escape out of the composite layup during curing of the composite layup, and wherein edges of the venting layer extend past first edges of the first layer of composite material and second edges of the second layer of composite material and wherein a pathway in the number of pathways extends from one edge of the edges of the venting layer to another edge of the edges of the venting layer to allow the number of fluids to escape out of the composite layup during curing of the composite layup.

The following also describes an apparatus comprising a plurality of layers of composite material and a number of venting layers laid up between the plurality of layers of composite material. The number of venting layers and the plurality of layers of composite material may form a composite layup. The number of venting layers may be configured to provide a number of pathways for allowing a number of fluids to escape out of the composite layup during curing of the composite layup.

The following also describes a composite patch comprising a first layer of composite material applied over a surface, a first venting layer applied over the first layer of composite material, a second layer of composite material applied over the first venting layer, a second venting layer applied over the second layer of composite material, and a third layer of composite material applied over the second venting layer. The first venting layer and the second venting layer may be selected from one of a positioning fabric, Buckypaper, a fiberglass layer, and a nanomaterial layer. Each of the first layer of composite material, the second layer of composite material, and the third layer of composite material may comprise a number of plies and may be selected from one of a wet layup layer and a prepreg layer. The first layer of composite material, the first venting layer, the second layer of composite material, the second venting layer, and the third layer of composite material may form the composite layup configured to be cured to form the composite patch. The first venting layer and the second venting layer may be configured to provide a number of pathways for allowing a number of fluids to escape out of the composite layup during curing of the composite layup such that porosity of the composite patch may be reduced. The number of fluids may include at least one of air, moisture, a chemical, and a volatile gas.

Advantageously the method further including applying an additional venting layer (162) over a previously applied layer of composite material (163); applying an additional layer of composite material (164) over the additional venting layer (162); and repeating the steps of applying the additional venting layer (162) over the previously applied layer of composite material (163) and applying the additional layer of composite material (164) over the additional venting layer (162) until a selected number of layers of composite material (120) have been laid up to form the composite layup (104).

Advantageously the method wherein the venting layer is a first venting layer (158) and further including applying a second venting layer (160) over the second layer of composite material (154); and applying a third layer of composite material (156) over the second venting layer (160) in which the first layer of composite material (152), the first venting layer (158), the second layer of composite material (154), the second venting layer (160), and the third layer of composite material (156) form the composite layup (104) for the composite structure (102) and in which the first venting layer (158) and the second venting layer (160) are configured to reduce the porosity (168) of the composite structure (102). The venting layer provides a number of pathways (130) for allowing a number of fluids (132) to escape out of the composite layup (104) during curing of the composite layup (104). Edges (408) of the venting layer extend past first edges (604) of the first layer of composite material (152) and second edges (706) of the second layer of composite material (154) and wherein a pathway in the number of pathways (130) extends from one edge of the edges (408) of the venting layer to another edge of the edges (408) of the venting layer to allow the number of fluids (132) to escape out of the composite layup (104) during curing of the composite layup (104).

Advantageously the method wherein the number of fluids (132) includes at least one of air (136), moisture (142), a chemical (138), and a volatile gas (140).

Advantageously the method further including curing the composite layup (104) to form the composite structure (102), wherein a number of fluids (132) escapes through a number of pathways (130) formed by the venting layer during curing of the composite layup (104) such that the porosity (168) in the composite structure (102) is reduced.

Advantageously the method wherein the step of curing the composite layup (104) to form the composite structure (102) includes applying at least one of heat (108) and pressure (110) to the composite layup (104) to form the composite structure (102).

Advantageously the method further including pre-curing the composite layup (104) to form the composite structure (102), wherein the composite structure (102) is a composite patch (103); and applying the composite patch (103) to a rework location at a later point in time.

Advantageously the method further including curing partially the composite layup (104) to form a partially cured composite layup; placing the partially cured composite layup at a rework location; and curing fully the partially cured composite layup to form the composite structure (102), wherein the composite structure is a composite patch (103).

Advantageously the method wherein applying the first layer of composite material (152) over the surface (153) includes applying the first layer of composite material (152) over the surface (153) of a location at which an inconsistency is present, wherein the composite structure (102) is a composite patch (103) for the inconsistency.

Advantageously the method wherein each of the first layer of composite material (152) and the second layer of composite material (154) comprises a number of plies.

Advantageously the method wherein the first layer of composite material (152) and the second layer of composite material (154) are selected from at least one of a wet layup layer (126) and a prepreg layer (128).

There is also described an apparatus wherein the plurality of layers of composite material (120) include a first layer of composite material (152) and a second layer of composite material (154) and the number of venting layers (122) includes a first venting layer (158) in which the first venting layer (158) is laid up between the first layer of composite material (152) and the second layer of composite material (154).

Advantageously the apparatus further includes a curing system (106) configured to cure the composite layup (104) to form a composite structure (102), wherein the number of fluids (132) escapes through the number of pathways (130) formed by the number of venting layers (122) during curing of the composite layup (104) such that porosity (168) of the composite structure (102) is reduced.

Advantageously the composite layup (104) is laid up at a rework location and wherein the curing system (106) is further configured to cure the composite layup (104) at the rework location to form a composite patch (103).

Advantageously the curing system (106) is further configured to partially cure the composite layup (104) to form a partially cured composite layup that is placed at a rework location and wherein the curing system (106) is further configured to fully cure the partially cured composite layup at the rework location of the inconsistency to form a composite patch (103) for the inconsistency.

Advantageously the curing system (106) is configured to pre-cure the composite layup (104) to form a composite patch (103) and wherein the composite patch (103) is applied to a rework location at a later point in time. The first layer of composite material (152) in the plurality of layers of composite material (120) is laid up over a surface (153) in which the surface (153) is selected from one of a wing, a fuselage, and a spacecraft.

Advantageously each of the plurality of layers of composite material (120) comprises a number of plies.

Advantageously a layer of composite material in the plurality of layers of composite material (120) is selected from one of a wet layup layer (126) and a prepreg layer (128) and wherein a venting layer in the number of venting layers (122) is selected from one of a positioning fabric (144), Buckypaper (148), a fiberglass layer (146), and a nanomaterial layer (150).

The features and functions may be achieved independently in various embodiments of the present disclosure or may be combined in yet other embodiments in which further details may be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of an illustrative embodiment of the present disclosure when read in conjunction with the accompanying drawings, wherein:
**Figure 1** is an illustration of a block diagram of a manufacturing environment in accordance with an illustrative embodiment;
**Figure 2** is an illustration of a composite layup in accordance with an illustrative embodiment;
**Figure 3** is an illustration of a cross-sectional view of a curing system for curing a composite layup in accordance with an illustrative embodiment;
**Figures 4-16** are illustrations of a process for forming a composite layup for a composite structure as part of an assembly in a curing system in accordance with an illustrative embodiment;
**Figure 17** is an illustration of a fiberglass layer applied over a layer of composite material in accordance with an illustrative embodiment;
**Figure 18** is an illustration of a composite layup used in a rework of a part in accordance with an illustrative embodiment;
**Figure 19** is an illustration of a flowchart of a process for reducing porosity in a composite structure in accordance with an illustrative embodiment;
**Figure 20** is an illustration of an aircraft manufacturing and service method in accordance with an illustrative embodiment; and
**Figure 21** is an illustration of an aircraft in which an illustrative embodiment may be implemented.

### DETAILED DESCRIPTION

The different illustrative embodiments recognize and take into account different considerations. For example, without limitation, the different illustrative embodiments recognize and take into account that prepreg materials may be used to form a composite structure with a desired level of porosity such that the number of voids formed in the composite structure are within selected tolerances. A prepreg material may be a fabric of nonwoven material or roving combined with resin. In other words, a prepreg material may be a fabric pre-infused with resin, a prepreg tape, a prepreg tow, a unidirectional prepreg, or some other suitable type of prepreg material.

The different illustrative embodiments also recognize and take into account that materials for use in wet layup processes may have a longer shelf life as compared to prepreg materials. A wet layup fabric may be an example of a composite layup formed using the wet layup process. The different illustrative embodiments recognize and take into account that both the resin materials and dry reinforcement materials used in wet layup processes may be stored longer than prepreg materials. Further, the resin materials used in wet layup processes may not require refrigeration for storage as compared to prepreg materials.

For these reasons, using wet layup materials may be preferable to prepreg materials. For example, without limitation, using wet layup materials may reduce the cost of forming composite structures. However, the different illustrative embodiments recognize and take into account that in some cases, composite structures formed using wet layup materials may have increased porosity as compared to composite structures formed using prepreg materials.

Additionally, the different illustrative embodiments recognize and take into account that porosity may be increased when wet layup materials and prepreg materials are used for manufacturing parts that have curved surfaces and/or performing reworks in areas that have curved surfaces and/or recessed areas. Further, the different illustrative embodiments recognize and take into account that the amount of air and moisture vented during curing of wet layup materials or prepreg materials may depend on the geometry of the part being manufactured using the wet layup or prepreg.

The different illustrative embodiments also recognize and take into account that some currently available methods for reducing porosity in composite structures formed using wet layup materials may be more time-consuming and expensive than desired. Further, some currently available methods for reducing porosity in composite structures may be limited in the number of plies that may be used to form a composite structure.

Thus, the different illustrative embodiments may provide a method and apparatus for reducing porosity in a composite structure. In one illustrative embodiment, a method for reducing porosity in a composite structure may be provided. A venting layer may be applied over a first layer of composite material. A second layer of composite material may be applied over the venting layer. The first layer of composite material, the venting layer, and the second layer of composite material may form a composite layup for the composite structure.

The composite layup may be cured to form the composite structure. The venting layer provides a number of pathways for allowing a number of fluids to escape out of the composite layup during curing of the composite layup.

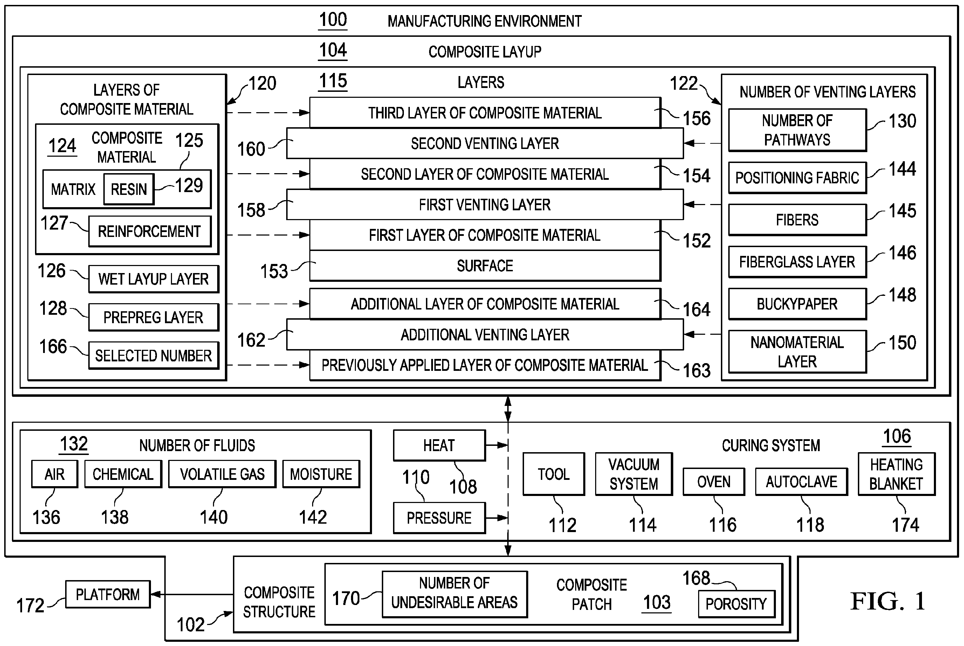

With reference now to **Figure 1****,** an illustration of a block diagram of a manufacturing environment is depicted in accordance with an illustrative embodiment. In these illustrative examples, manufacturing environment **100** may be an environment in which composite structure **102** may be formed. Composite structure **102** may be formed by curing composite layup **104** using curing system **106.**

Curing system **106** may be configured to apply at least one of heat **108** and pressure **110** to composite layup **104** to cure composite layup **104.** In these illustrative examples, curing system **106** may comprise at least one of tool **112,** vacuum system **114,** oven **116,** autoclave **118,** and other suitable devices that may be used to apply at least one of heat **108** and pressure **110** to composite layup **104.** Depending on the implementation, tool **112** may take the form of a caul plate, a mandrel, a mold, a metal plate, or some other suitable type of tool.

As used herein, the phrase "at least one of', when used with a list of items, means different combinations of one or more of the listed items may be used and only one of each item in the list may be needed. For example, "at least one of item A, item B, and item C" may include, for example, without limitation, item A, or item A and item B. This example also may include item A, item B, and item C, or item B and item C.

In other examples, "at least one of' may be, for example, without limitation, two of item A, one of item B, and ten of item C; four of item B and seven of item C; and other suitable combinations.

Composite layup **104** may be comprised of layers **115.** In these illustrative examples, layers **115** may include layers of composite material **120** and number of venting layers **122.** Of course, depending on the implementation, other layers may be included in composite layup **104.**

A layer in layers of composite material **120** may take the form of any type of layer containing composite material **124.** Composite material **124** may include at least one of matrix **125** and reinforcement **127.**

Matrix **125** may be a substantially uniform material in which reinforcement **127** may be embedded. As one illustrative example, matrix **125** may take the form of resin **129.** Resin **129** may be any polymer material that may be used to support reinforcement **127.** Resin **129** may take the form of, for example, without limitation, epoxy, polyamide, a polyester, a polyimide, or some other suitable type of resin.

Reinforcement **127** may comprise, for example, without limitation, fibers that form a fabric, tape, foil, a screen, ground minerals, and other suitable types of materials that may be supported using matrix **125.** Reinforcement **127** may comprise, for example, without limitation, at least one of carbon fibers, fiberglass fibers, aramid fibers, metallic fibers, metal layers, ceramic fibers, and other suitable types of reinforcement materials.

In these illustrative examples, matrix **125** and reinforcement **127** may be combined to form composite material **124.** For example, without limitation, composite material **124** may be formed by infusing or impregnating reinforcement **127** with resin **129.**

Each layer of composite material in layers of composite material **120** may comprise any number of plies. As used herein, a "ply" may be a single layer of composite material. For example, without limitation, a layer of composite material in layers of composite material **120** may include one, two, three, four, five, or some other number of plies.

Further, in one illustrative example, each layer in layers of composite material **120** may take the form of wet layup layer **126.** In another illustrative example, each layer in layers of composite material **120** may take the form of prepreg layer **128.** Of course, in other illustrative examples, layers of composite material **120** may include other suitable types of layers containing composite material **124.**

Wet layup layer **126** may be any number of plies in which each ply is formed by liquid resin being applied to dry reinforcement material. Prepreg layer **128** may be any number of plies in which each ply is formed by a reinforcement material pre-infused with resin.

In these illustrative examples, a venting layer in number of venting layers **122** may take the form of any layer that is configured to provide number of pathways **130** for allowing number of fluids **132** to escape composite layup **104** during curing. In other words, a venting layer in number of venting layers **122** may take the form of any layer that is configured to provide number of pathways **130** for allowing number of fluids **132** to vent out of composite layup **104** during curing.

As used herein, a "fluid" may comprise at least one of a liquid, air, and a gas. For example, without limitation, number of fluids **132** may include at least one of air **136,** chemical **138** produced by resin **129** during curing, volatile gas **140** produced by resin **129** during curing, moisture **142,** and other suitable types of liquids and gases.

In these illustrative examples, a venting layer in number of venting layers **122** is formed by fibers **145** that are arranged in the form of a woven fabric, or a woven mat. Fibers **145** extend past layers of composite material **120** in a manner that forms number of pathways **130** that allow number of fluids **132** to escape during curing of composite layup **104.**

Number of venting layers **122** include at least one of positioning fabric **144,** fiberglass layer **146,** Buckypaper **148,** nanomaterial layer **150,** and other suitable types of venting layers. Other suitable types of venting layers include a nylon layer, or a polyester fiber layer that allows number of fluids **132** to be vented out of composite layup **104.**

Positioning fabric **144** may also be referred to as a positioning cloth or a scrim cloth. In one illustrative example, different types of positioning fabric **144** may be obtained from Aerospheres (UK) Limited (Ltd).

When a venting layer in number of venting layers **122** takes the form of positioning fabric **144,** the fibers that form positioning fabric **144** may form number of pathways **130.** For example, without limitation, number of fluids **132** may be allowed to escape by traveling along and/or within the different fibers in positioning fabric **144.**

As another example, fiberglass layer **146** may take the form of a plurality of fiberglass strands that may be arranged to form a single layer. Number of pathways **130** may be formed along the different fiberglass strands in fiberglass layer **146.**

Further, Buckypaper **148** may be a thin sheet comprising an arrangement of carbon nanotubes. Nanomaterial layer **150** may take the form of a plurality of nanowires, nanotubes, nanofibers, and/or other suitable types of nanosized elements that may be arranged to form a single layer. Of course, in other illustrative examples, other types of venting layers may be used in composite layup **104.**

Composite layup **104** may be formed in a number of different ways having a number of different configurations for layers of composite material **120** and number of venting layers **122.** In one illustrative example, layers of composite material **120** in composite layup **104** may include first layer of composite material **152,** second layer of composite material **154,** and third layer of composite material **156.** Further, number of venting layers **122** may include first venting layer **158** and second venting layer **160.**

In this illustrative example, composite layup **104** is formed by first applying first layer of composite material **152** over surface **153.** Surface **153** is selected from one of a wing, a fuselage, or a spacecraft.

First venting layer **158** is then be applied over first layer of composite material **152.** Next, second layer of composite material **154** is applied over first venting layer **158.** Second venting layer **160** may then be applied over second layer of composite material **154.** Thereafter, third layer of composite material **156** may be applied over second venting layer **160.**

In this manner, first layer of composite material **152,** first venting layer **158,** second layer of composite material **154,** second venting layer **160,** and third layer of composite material **156** may form composite layup **104** for composite structure **102.** First layer of composite material **152** and third layer of composite material **156** may form the bottom layer and top layer, respectively, of composite layup **104.**

Further, in other illustrative examples, layers of composite material **120** may include additional layers of composite material, and number of venting layers **122** may include additional venting layers. For example, without limitation, additional venting layer **162** may be applied over previously applied layer of composite material **163** in layers of composite material **120.** In one illustrative example, previously applied layer of composite material **163** may be third layer of composite material **156.** Of course, in other illustrative examples, previously applied layer of composite material **163** may be some other layer of composite material in layers of composite material **120.**

Further, additional layer of composite material **164** may be applied over additional venting layer **162.** This process of applying additional venting layer **162** over previously applied layer of composite material **163** and applying additional layer of composite material **164** over additional venting layer **162** may be repeated until selected number **166** of layers of composite material **120** have been laid up to form composite layup **104.**

Additionally, in some illustrative examples, more than one layer of composite material in layers of composite material **120** may be applied between venting layers in number of venting layers **122.** In other illustrative examples, more than one venting layer in number of venting layers **122** may be applied between layers of composite material in layers of composite material **120.** In this manner, layers of composite material **120** and number of venting layers **122** may be stacked up in a number of different ways.

Once composite layup **104** has been formed, composite layup **104** may then be cured using curing system **106** to form composite structure **102.** During curing of composite layup **104,** number of venting layers **122** in composite layup **104** may be configured to allow number of fluids **132** to escape out of composite layup **104** through number of pathways **130.**

In this manner, porosity **168** of composite structure **102** formed using composite layup **104** having number of venting layers **122** may be reduced as compared to composite structure **102** formed using composite layup **104** not having number of venting layers **122.** Porosity **168** of composite structure **102** may be a measure of number of undesirable areas **170** in composite structure **102.**

Number of undesirable areas **170** may include any number of voids within composite structure **102.** As used herein, a "void" may be a space within composite structure **102** not filled with material from layers **115** in composite layup **104.** For example, without limitation, a void may be a space or pocket in composite structure **102** filled with one or more of number of fluids **132.** In this illustrative example, porosity **168** may be reduced when number of undesirable areas **170** in composite structure **102** is reduced.

In this manner, the different illustrative embodiments may provide a process for forming composite layup **104** in a manner that reduces porosity **168** in composite structure **102** formed using composite layup **104.** Reducing porosity **168** in composite structure **102** may improve strength and durability of composite structure **102.**

For example, without limitation, composite structure **102** may be configured for use in platform **172.** Reducing porosity **168** in composite structure **102** may improve the strength and durability of composite structure **102** used in platform **172.**

Platform **172** may take a number of different forms. Platform **172** is selected from one of a fuselage, an aircraft, or a spacecraft.

Further, in some cases, composite structure **102** may be configured for use in reworking a part or portion of platform **172.** In these cases, when composite structure **102** is used for reworking a part or portion of platform **172,** composite structure **102** may be referred to as composite patch **103.**

For example, without limitation, composite layup **104** may be laid up at a location of an inconsistency outside of selected tolerances on platform **172.** An inconsistency outside of selected tolerances may be an undesired inconsistency.

In some illustrative examples, composite layup **104** may be laid up at the location of the inconsistency and then cured as part of the rework. In these examples, surface **153** over which first layer of composite material **152** is applied may be a surface of the part or portion of platform **172** being reworked. Surface **153** is a wing, a fuselage, or a spacecraft.

In other illustrative examples, composite layup **104** may be laid up at the location of the inconsistency and then cured at this location to form composite patch **103.** Of course, in some cases, composite layup **104** may be first partially cured to form a partially cured composite layup prior to being placed at the location of the inconsistency. This partially cured composite layup may be placed at the location of the inconsistency and then fully cured as part of the rework of the inconsistency.

In still other cases, composite layup **104** may be pre-cured to form composite patch **103.** Composite patch **103** may then be applied to the rework location or stored for use at a later point in time. In other words, composite patch **103** may be stored in a number of remote locations until composite patch **103** is needed for reworking an inconsistency.

Pre-curing composite layup **104** may include, for example, without limitation, at least partially hardening resin **129** in composite layup **104** using heat. In some cases, pre-curing composite layup **104** may include fully hardening resin **129** in composite layup **104.**

In one illustrative example, when platform **172** takes the form of an aircraft, the inconsistency outside of selected tolerances may be an inconsistency at a bond line for the aircraft. Composite layup **104** may be laid up at this rework location and then cured at this rework location to form composite patch **103** at the bond line.

Composite patch **103** may be formed such that the inconsistency is no longer present at the bond line. Further, using number of venting layers **122** in composite layup **104** may ensure that number of desirable areas **170** are reduced and/or prevented from forming in composite patch **103** during curing of composite layup **104** to form composite patch **103.** In other words, using number of venting layers **122** in composite layup **104** may reduce porosity **168** of composite patch **103.**

The illustration of manufacturing environment **100** in **Figure 1** is not meant to imply physical or architectural limitations to the manner in which an illustrative embodiment may be implemented. Other components in addition to and/or in place of the ones illustrated may be used. Some components may be optional. Also, the blocks are presented to illustrate some functional components. One or more of these blocks may be combined, divided, or combined and divided into different blocks when implemented in an illustrative embodiment.

In some illustrative examples, layers in addition to layers of composite material **120** and number of venting layers **122** may be present in layers **115** of composite layup **104.** In other illustrative examples, curing system **106** may include other devices in addition to and/or in place of the ones described above. For example, without limitation, curing system **106** may include heating blanket **174.**

Further, in still other illustrative examples, a layer of composite material in layers of composite material **120** may not form the top layer and/or bottom layer of composite layup **104.** For example, without limitation, in some cases, a venting layer in number of venting layers **122** may form the top layer or bottom layer of composite layup **104.** In still other illustrative examples, an adhesive layer may form the top layer and/or bottom layer of composite layup **104.**

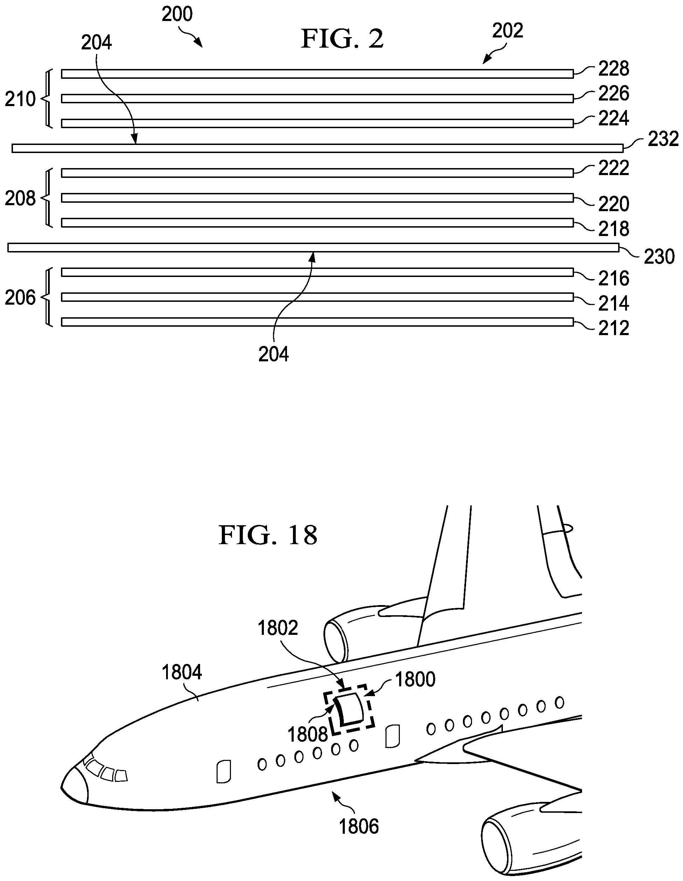

With reference now to **Figure 2****,** an illustration of a composite layup is depicted in accordance with an illustrative embodiment. The different components shown in **Figure 2** may be combined with components in **Figure 1****,** used with components in **Figure 1****,** or a combination of the two. Additionally, some of the components in this figure may be illustrative examples of how components shown in block form in **Figure 1** may be implemented as physical structures.

In this illustrative example, composite layup **200** may be an example of one implementation for composite layup **104** in **Figure 1****.** As depicted, composite layup **200** may include layers of composite material **202** and venting layers **204.**

Layers of composite material **202** may include first layer of composite material **206,** second layer of composite material **208,** and third layer of composite material **210.** As illustrated, each of these layers of composite material may comprise three plies. For example, without limitation, first layer of composite material **206** may include first ply **212,** second ply **214,** and third ply **216.** Second layer of composite material **208** may include first ply **218,** second ply **220,** and third ply **222.** Third layer of composite material **210** may include first ply **224,** second ply **226,** and third ply **228.** In this illustrative example, first ply **212,** second ply **214,** third ply **216,** first ply **218,** second ply **220,** third ply **222,** first ply **224,** second ply **226,** and third ply **228** may take the form of carbon-reinforced plies.

Venting layers **204** may include first venting layer **230** and second venting layer **232.** First venting layer **230** and second venting layer **232** may take the form of positioning fabrics in this illustrative example.

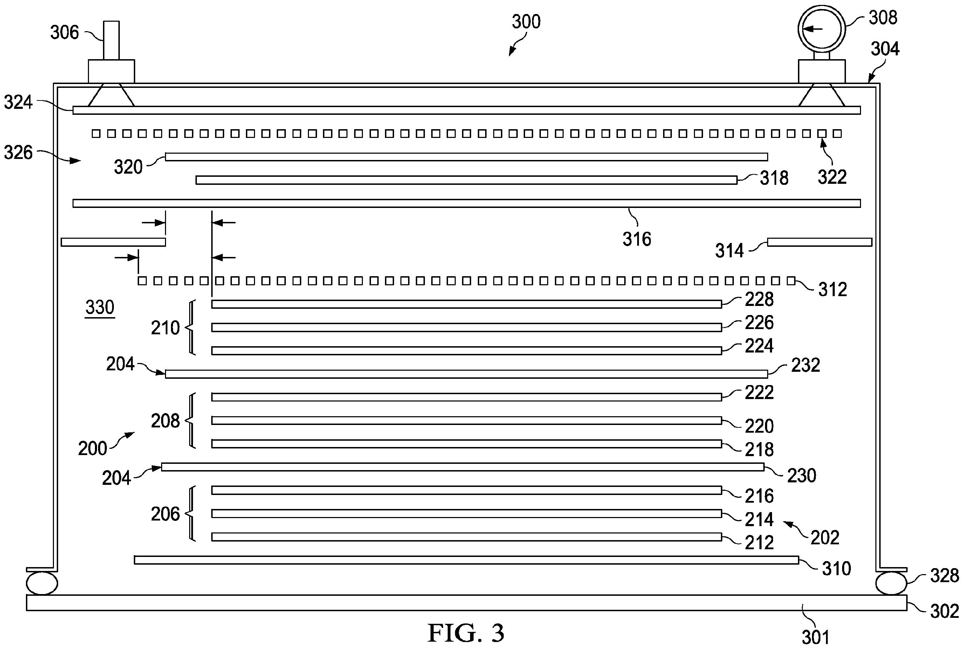

With reference now to **Figure 3****,** an illustration of a cross-sectional view of a curing system for curing a composite layup is depicted in accordance with an illustrative embodiment. The different components shown in **Figure 3** may be combined with components in **Figure 1****,** used with components in **Figure 1****,** or a combination of the two. Additionally, some of the components in **Figure 3** may be illustrative examples of how components shown in block form in **Figure 1** may be implemented as physical structures.

As depicted in this example, curing system **300** may be used to cure composite layup **200** from **Figure 2****.** In this illustrative example, curing system **300** may include tool **301,** vacuum bagging **304,** vacuum probe **306,** and vacuum gauge **308.** As depicted, release film **310** may be applied over tool **301.**

In this depicted example, tool **301** may take the form of caul plate **302.** However, in other illustrative examples, tool **301** may take the form of a metal plate, a mandrel, a mold, a part, a structure, a metal structure, or some other suitable type of tool over which materials may be laid up.

Caul plate **302** may be a metal sheet or cured plastic sheet that is used to provide a smooth surface for the composite structure formed by curing composite layup **200.** Release film **310** may be a film comprised of any material configured to be easily removed from caul plate **302** after curing. Release film **310** may take the form of a liquid or solid film, depending on the implementation.

Composite layup **200** from **Figure 2** may then be applied over release film **310.** In particular, the different layers of composite layup **200** from **Figure 2** may be laid up over release film **310** to form composite layup **200.** However, in some illustrative examples, composite layup **200** may be formed prior to composite layup **200** being applied over release film **310.**

Perforated release film **312** may then be applied over composite layup **200.** Edge breather material **314** may be applied over perforated release film **312** around the edges of composite layup **200.** Edge breather material **314** may be a porous material that provides a substantially continuous air path over and/or around composite layup **200.**

Further, as illustrated, fiberglass fabric **316** may be applied over edge breather material **314** and over perforated release film **312.** Fiberglass fabric **316** may be porous and may help in venting composite layup **200.** Release film **318** may be applied over fiberglass fabric **316.** Heat blanket **320** may be applied over release film **318.**

Additionally, perforated release film **322** may then be applied over heat blanket **320.** Breather material **324** may be applied over perforated release film **322.** In this manner, release film **310,** composite layup **200,** perforated release film **312,** edge breather material **314,** fiberglass fabric **316,** release film **318,** heat blanket **320,** perforated release film **322,** and breather material **324** may form assembly **326.**

Vacuum bagging **304** may be placed over assembly **326.** Sealing tape **328** may be used to seal vacuum bagging **304** to caul plate **302** and provide enclosed space **330** around assembly **326.**

In this illustrative example, vacuum probe **306** may be configured to reduce a pressure inside enclosed space **330** to apply a vacuum to enclosed space **330.** Vacuum gauge **308** may be used to measure the pressure inside enclosed space **330.** Further, heat blanket **320** may be configured to apply heat to assembly **326.**

This application of a vacuum and heat may cause composite layup **200** to be cured to form a composite structure. Further, venting layers **204** in composite layup **200** may provide pathways (not shown) for fluids (not shown) to escape out of composite layup **200.** These fluids (not shown) may include, for example, without limitation, air, moisture, chemicals produced during curing, volatile gases produced during curing, and other types of fluids.

The illustrations of composite layup **200** in **Figure 2** and curing system **300** in **Figure 3** are not meant to imply physical or architectural limitations to the manner in which an illustrative embodiment may be implemented. Other components in addition to or in place of the ones illustrated may be used. Some components may be optional.

For example, without limitation, other layers may be present in composite layup **200** in addition to or in place of the ones described above. Further, in other illustrative examples, one or more of perforated release film **312,** release film **318,** and perforated release film **322** may be excluded from assembly **326.**

Still further, although composite layup **200** is depicted laid up over caul plate **302** in **Figure 3** having a substantially planar surface, composite layup **200 from** **Figure 2** may be laid up over a nonplanar surface. For example, without limitation, in some cases, composite layup **200** may be laid up over a curved surface or a surface having raised and/or recessed portions.

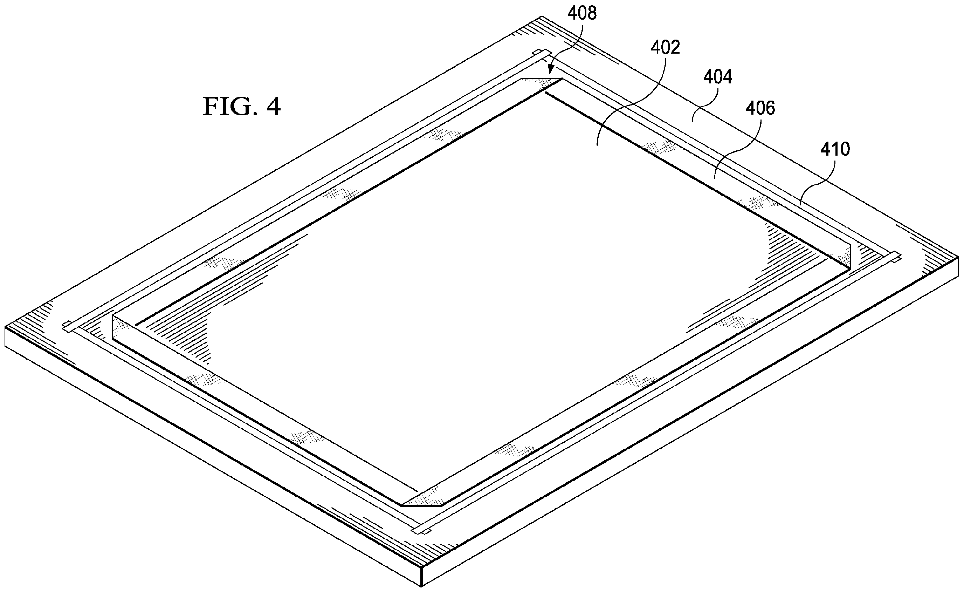

With reference now to **Figures 4-16****,** illustrations of a process for forming a composite layup for a composite structure as part of an assembly in a curing system are depicted in accordance with an illustrative embodiment. The process described in **Figures 4-****16** may be an example of one implementation for forming a composite layup, such as composite layup **104** in **Figure 1****,** or as part of an assembly for a curing system, such as curing system **106** in **Figure 1****.**

The different components shown in **Figures 4-16** may be combined with components in **Figure 1****,** used with components in **Figure 1****,** or a combination of the two. Additionally, some of the components in these figures may be illustrative examples of how components shown in block form in **Figure 1** may be implemented as physical structures.

In **Figure 4****,** release film **402** may be applied over caul plate **404.** As depicted, edge breather material **406** may be applied around edges **408** of release film **402.** Further, sealing tape **410** may be applied over caul plate **404** and around edge breather material **406.**

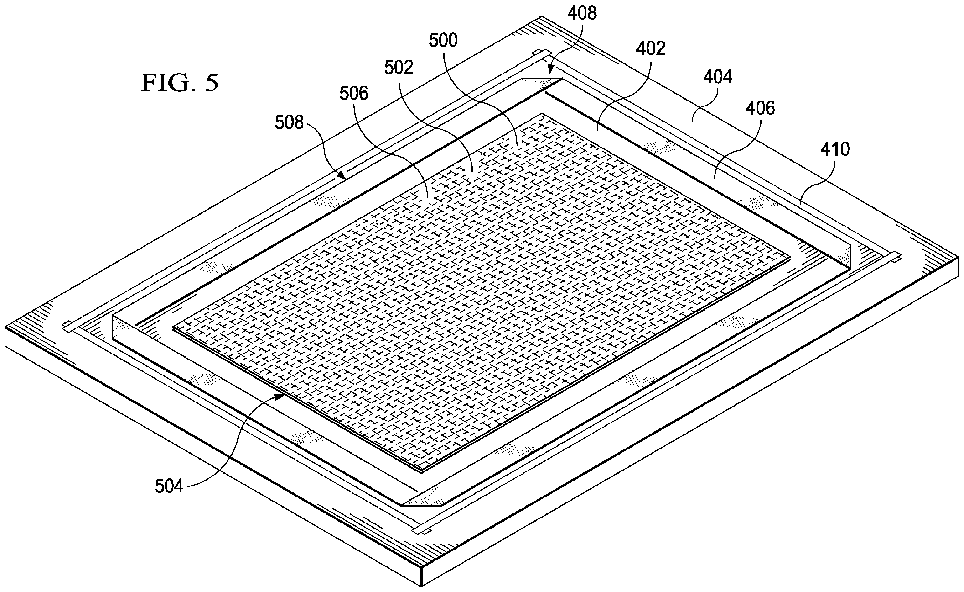

In **Figure 5****,** first layer of composite material **500** may be applied over release film **402.** In this illustrative example, first layer of composite material **500** may take the form of wet layup layer **502.** Wet layup layer **502** may comprise number of carbon-reinforced plies **504.** As depicted, first layer of composite material **500** may be bottom layer **506** for composite layup **508** being formed.

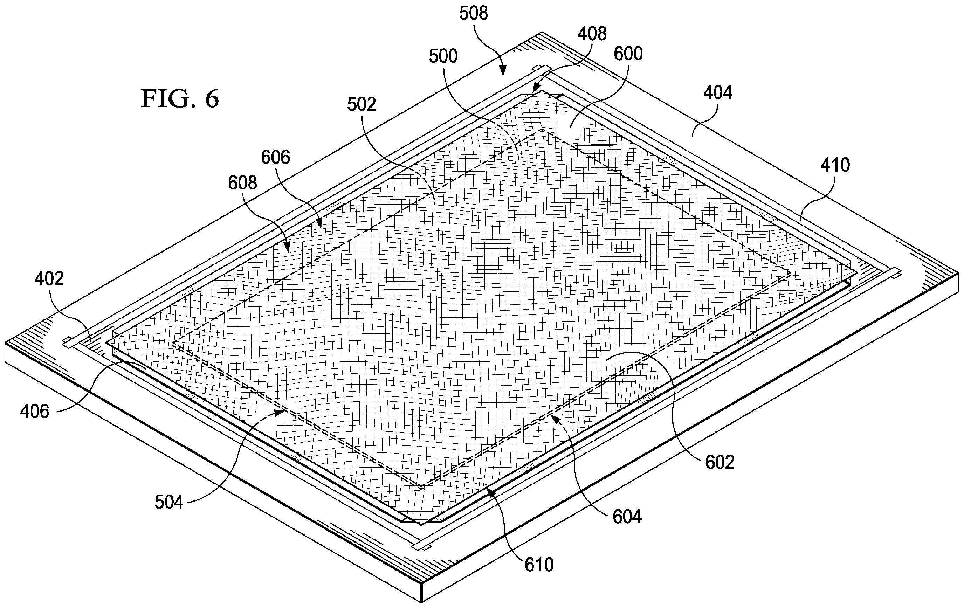

Turning now to **Figure 6****,** first venting layer **600** may be applied over first layer of composite material **500.** First venting layer **600** may take the form of positioning fabric **602** in this illustrative example. As depicted, positioning fabric **602** may be applied over first layer of composite material **500** such that edges **610** of positioning fabric **602** may extend past first edges **604** of first layer of composite material **500.**

Positioning fabric **602** may comprise fibers **606** that provide pathways **608** along which fluids (not shown) may be vented out of composite layup **508** during curing. Each pathway in pathways **608** may extend from one of edges **610** of positioning fabric **602** to another edge of edges **610** of positioning fabric **602** to allow fluids (not shown) to vent out of composite layup **508** during curing. In particular, fluids (not shown), such as gases, within composite layup **508** may flow along fibers **606** out of composite layup **508.**

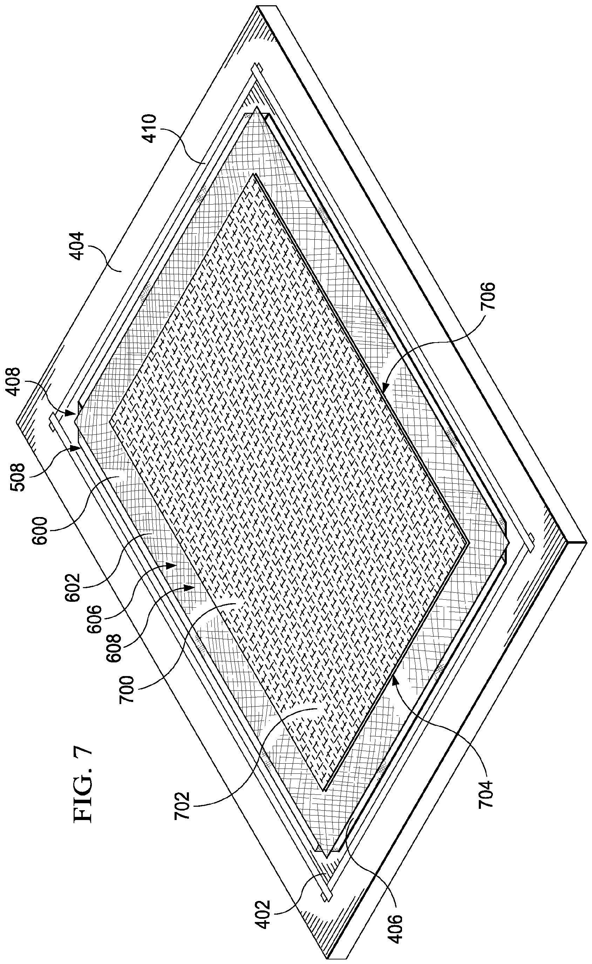

In **Figure 7****,** second layer of composite material **700** may be applied over first venting layer **600.** Second layer of composite material **700** may take the form of wet layup layer **702.** Wet layup layer **702** may comprise number of carbon-reinforced plies **704,** which may be similar to wet layup layer **502** in **Figure 5****.** As depicted, first venting layer **600** may extend past both first edges **604** of first layer of composite material **500** and second edges **706** of second layer of composite material **700.**

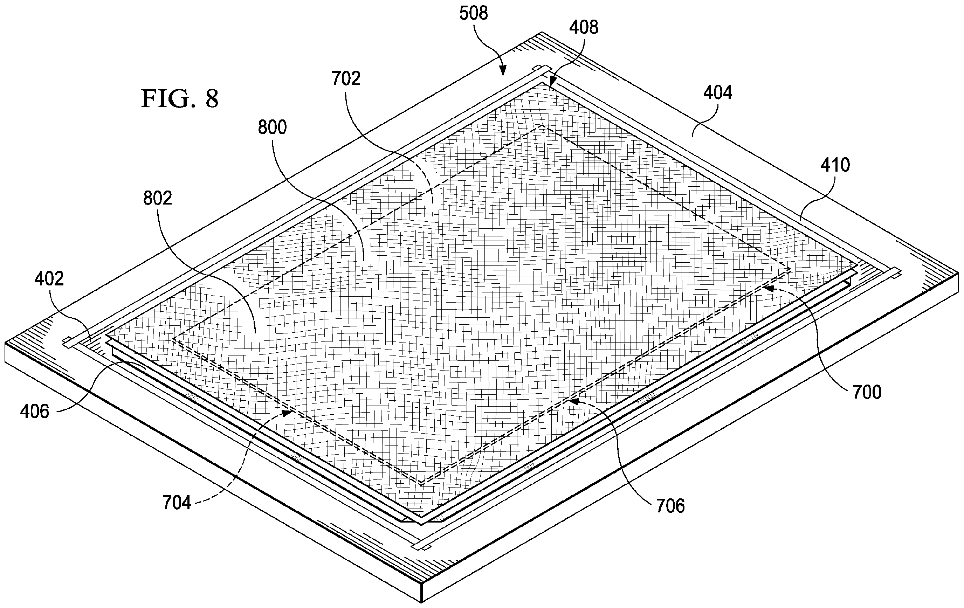

Referring now to **Figure 8****,** second venting layer **800** may be applied over second layer of composite material **700.** Second venting layer **800** may take the form of positioning fabric **802** in this depicted example. Positioning fabric **802** may be similar to positioning fabric **602** in **Figure 6****.** As depicted, positioning fabric **802** may extend over second edges **706** of second layer of composite material **700.**

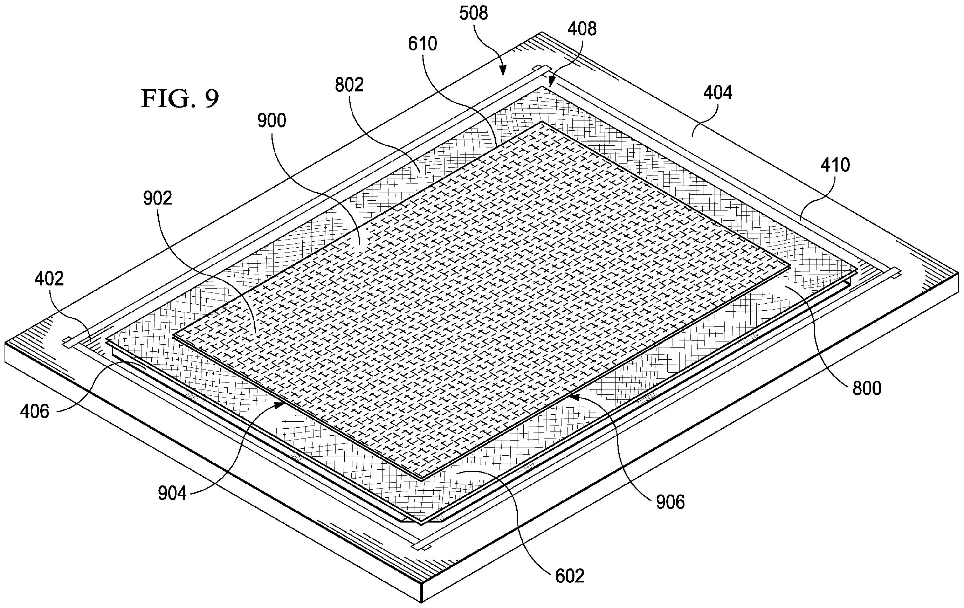

In **Figure 9****,** third layer of composite material **900** may be applied over second venting layer **800.** Third layer of composite material **900** may take the form of wet layup layer **902.** Wet layup layer **902** may comprise number of carbon-reinforced plies **904,** which may be similar to wet layup layer **502** in **Figure 5** and wet layup layer **702** in **Figure 7****.** As depicted, positioning fabric **802** may extend over both second edges **706** of second layer of composite material **700** in **Figure 7** and third edges **906** of third layer of composite material **900.**

First layer of composite material **500,** first venting layer **600,** second layer of composite material **700,** second venting layer **800,** and third layer of composite material **900** may form composite layup **508.** Composite layup **508** may be cured to form a composite structure, such as composite structure **102** in **Figure 1****.**

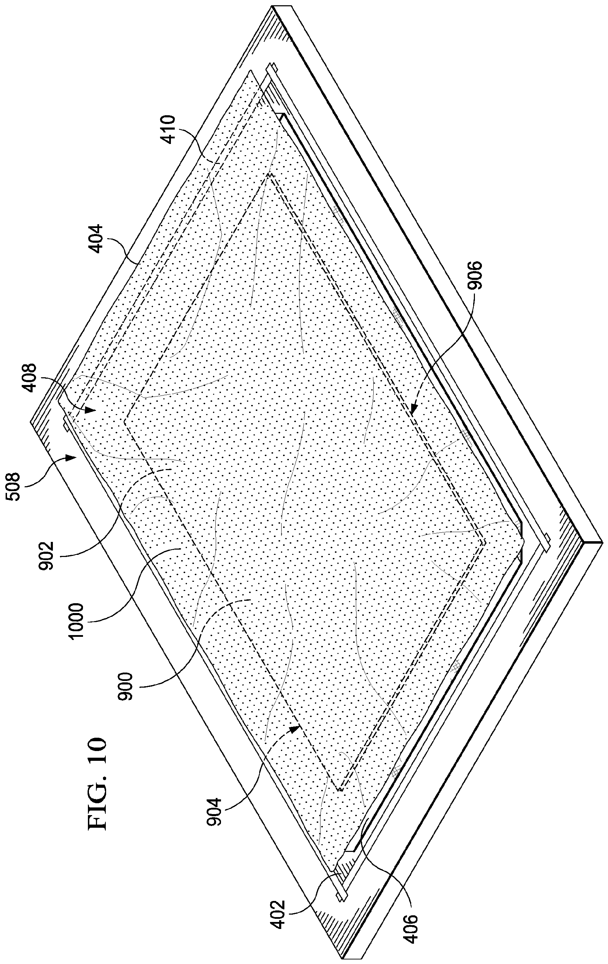

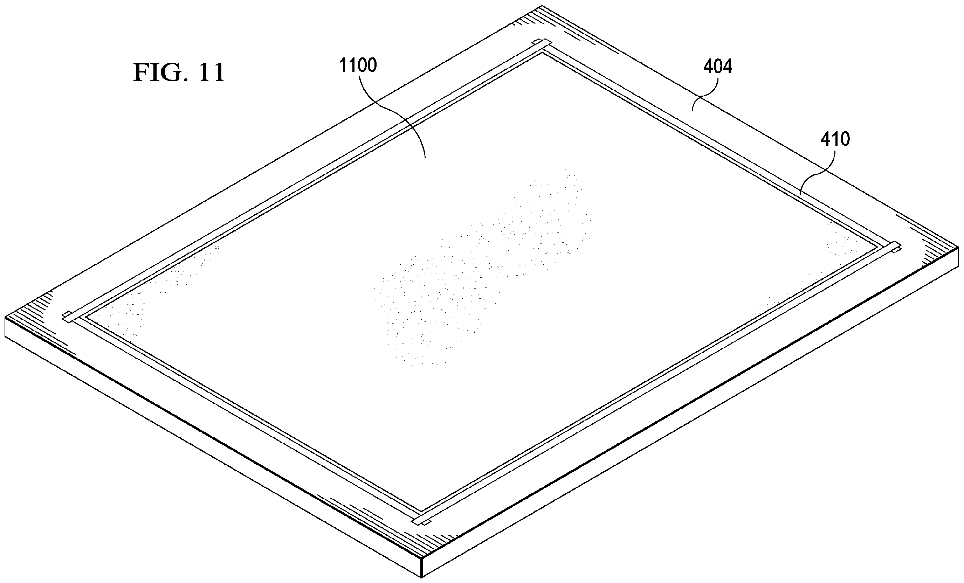

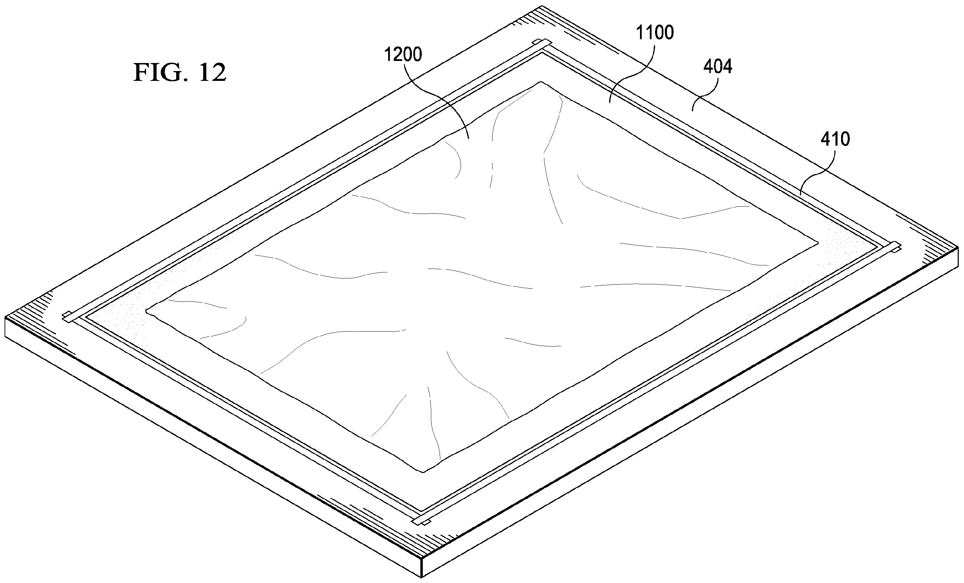

Turning now to **Figure 10****,** perforated release film **1000** may be applied over composite layup **508.** In **Figure 11****,** fiberglass fabric **1100** may be applied over perforated release film **1000** in **Figure 10****.** Further, in **Figure 12****,** release film **1200** may be applied over fiberglass fabric **1100** from **Figure 11****.**

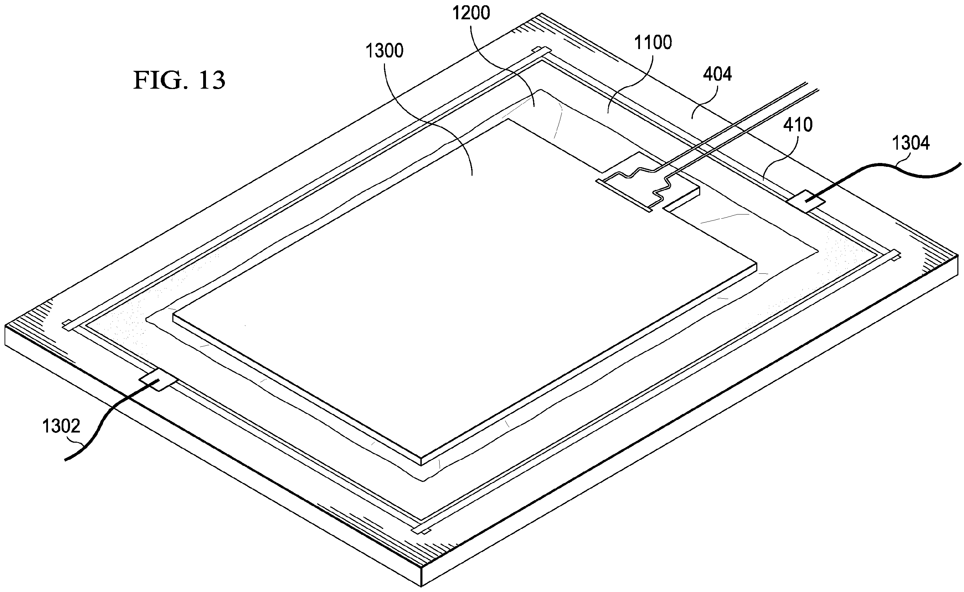

Referring now to **Figure 13****,** heat blanket **1300** may be applied over release film **1200** in **Figure 12****.** Heat blanket **1300** may be configured to apply heat to composite layup **508** from **Figure 9** when power is supplied to heat blanket **1300.**

Further, thermocouple **1302** and thermocouple **1304** may be placed around the edges of composite layup **508** (not shown), which may be under perforated release film **1000** from **Figure 10****,** fiberglass fabric **1100** from **Figure 11****,** and release film **1200** from **Figure 12****.** Thermocouple **1304** and thermocouple **1302** may be configured to measure the temperature of composite layup **508** when composite layup **508** is heated by heat blanket **1300.**

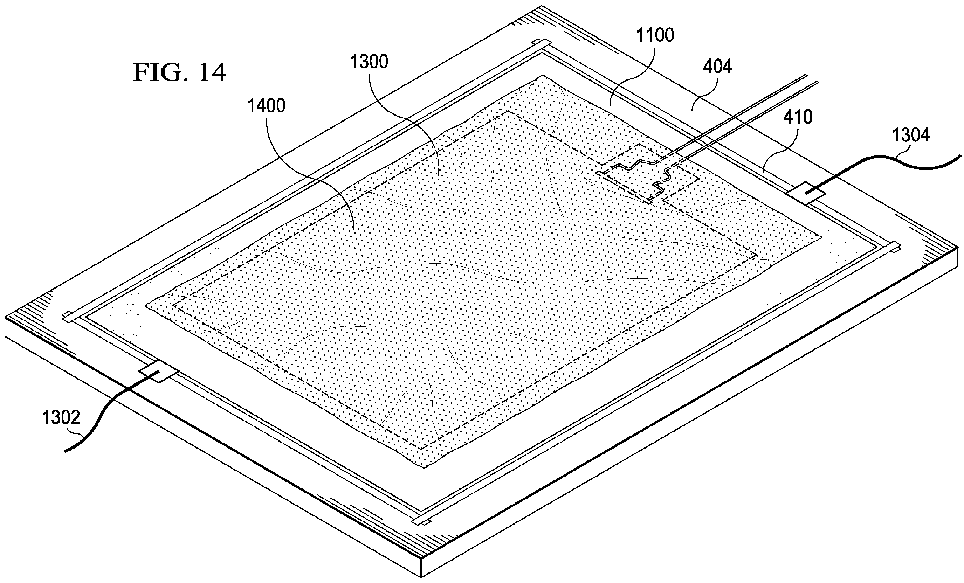

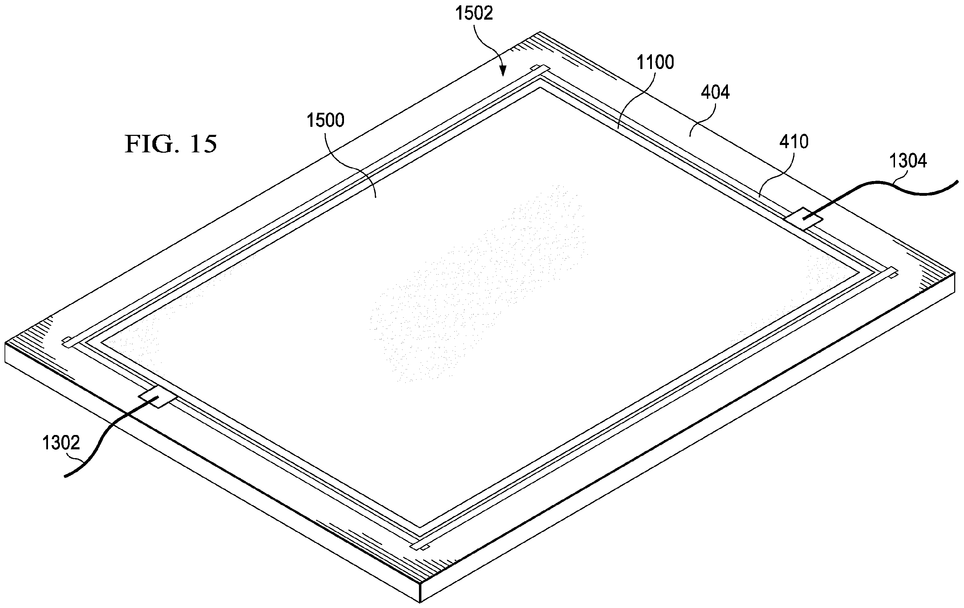

In **Figure 14****,** perforated release film **1400** may be applied over heat blanket **1300** from **Figure 13****.** In **Figure 15****,** breather material **1500** may be applied over perforated release film **1400** from **Figure 14****.**

In these illustrative examples, caul plate **404** from **Figure 4****,** release film **402** from **Figure 4****,** edge breather material **406** from **Figure 4****,** the fully formed composite layup **508** from **Figure 9****,** perforated release film **1000** from **Figure 10****,** fiberglass fabric **1100** from **Figure 11****,** release film **1200** from **Figure 12****,** heat blanket **1300** from **Figure 13****,** perforated release film **1400** from **Figure 14****,** and breather material **1500** from **Figure 15** may form assembly **1502.** In this manner, composite layup **508** may be formed as part of assembly **1502** in these illustrative examples.

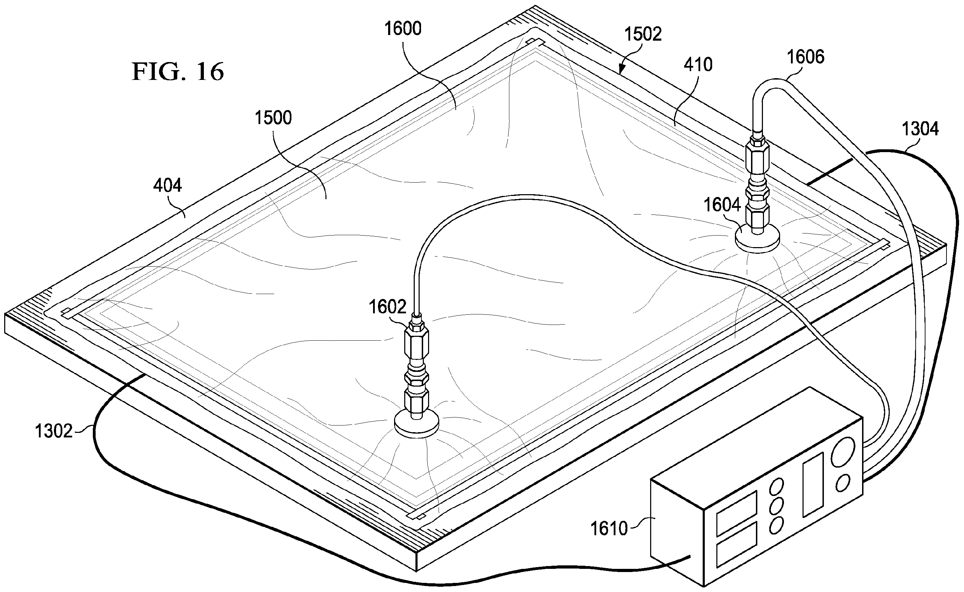

Turning now to **Figure 16****,** vacuum bagging **1600** may be placed around assembly **1502** from **Figure 15****.** Sealing tape **410** from **Figure 4** may be used to seal vacuum bagging **1600** such that assembly **1502** is within an enclosed space. Vacuum gauge **1602** and vacuum port **1604** may be connected to vacuum bagging **1600.** Vacuum hose **1606** may be connected to vacuum port **1604.** Vacuum port **1604** and vacuum hose **1606** may be configured to apply a vacuum within vacuum bagging **1600.**

Further, as depicted in this example, controller **1610** may be connected to thermocouple **1302** and thermocouple **1304** from **Figure 13****,** vacuum gauge **1602,** and vacuum hose **1606.** Controller **1610** may control the level of heat applied by heat blanket **1300** from **Figure 13****.** Controller **1610** may also control the pressure applied within vacuum bagging **1600** by vacuum port **1604** and vacuum hose **1606.**

First venting layer **600** from **Figure 6** and second venting layer **800** from **Figure 8** may be configured to provide pathways (not shown) that may allow a number of fluids (not shown) to escape out of composite layup **508** during curing. In this manner, the process described in **Figures 4-16** may be used to cure composite layup **508** in **Figure 9** to form a composite structure, such as composite structure **102** in **Figure 1****,** with reduced porosity. This composite structure may be used in a platform, such as platform **172** in **Figure 1****.**

The process illustrated in **Figures 4-16** is not meant to imply physical or architectural limitations to the manner in which an illustrative embodiment may be implemented. Other components in addition to and/or in place of the ones illustrated may be used. Some components may be optional.

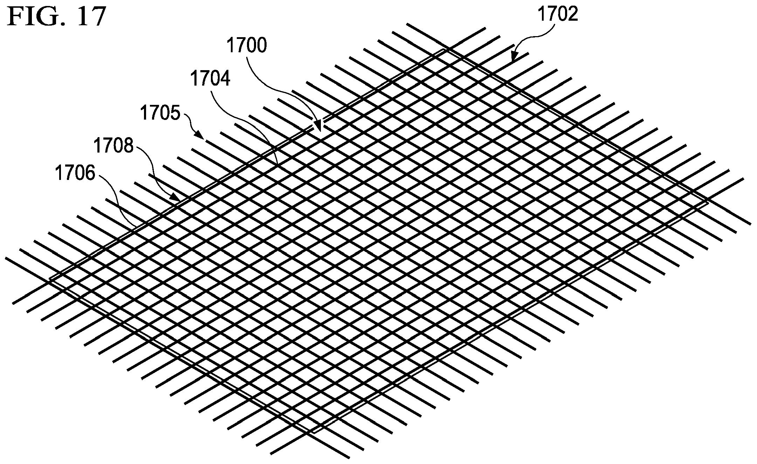

For example, first venting layer **600** in **Figure 6** may take the form of a fiberglass layer instead of positioning fabric **602** in **Figure 6****.** An example of one implementation of a fiberglass layer may be described in **Figure 17** below. Further, in other illustrative examples, first layer of composite material **500,** second layer of composite material **700,** and third layer of composite material **900** may take the form of prepreg layers instead of wet layup layer **502,** wet layup layer **702,** and wet layup layer **902,** respectively.

With reference now to **Figure 17****,** an illustration of a fiberglass layer applied over a layer of composite material is depicted in accordance with an illustrative embodiment. In this illustrative example, fiberglass layer **1700** may be an example of one implementation for a venting layer in number of venting layers **122** in **Figure 1****.**

As depicted, fiberglass layer **1700** may comprise plurality of fiberglass strands **1702** arranged in cross-hatch pattern **1704.** Fiberglass layer **1700** may be applied over composite layer **1706.** Further, edges **1705** of fiberglass strands **1702** may extend past edges **1708** of composite layer **1706.**

A portion of plurality of fiberglass strands **1702** may extend across the entire length of fiberglass layer **1700,** while another portion may extend across the entire width of fiberglass layer **1700.** In this manner, each fiberglass strand in plurality of fiberglass strands **1702** may provide a pathway along which a number of fluids (not shown) may travel.

With reference now to **Figure 18****,** an illustration of a composite layup used in a rework of a part is depicted in accordance with an illustrative embodiment. In this illustrative example, composite layup **1800** may be used to rework portion **1802** of fuselage **1804** of aircraft **1806.** In this illustrative example, composite layup **1800** may be an example of one implementation for composite layup **104** in **Figure 1****.**

As depicted, composite layup **1800** may be laid up on curved surface **1808** of portion **1802** of fuselage **1804.** Composite layup **1800** may be cured while composite layup **1800** is laid up over portion **1802** of fuselage **1804.** After curing, composite layup **1800** may take the form of a composite patch for fuselage **1804.**

Of course, in some illustrative examples, composite layup **1800** may be laid up over a tool and then partially cured to form a partially cured composite layup prior to being placed over portion **1802.** This partially cured composite layup may be placed over portion **1802** and then fully cured to form the composite patch for fuselage **1804.** In still other illustrative examples, composite layup **1800** may be fully cured to form the composite patch prior to the composite patch being placed over portion **1802** of fuselage **1804.**

While composite layup **1800** is described with respect to reworking fuselage **1804,** composite layup **1800** or some other suitable composite layup may be used to rework other sections of an aircraft, such as aircraft **1806.** For example, without limitation, a composite layup, such as composite layup **104** in **Figure 1****,** may be used to rework a portion of a wing on an aircraft, a section on a tail of an aircraft, or some other suitable portion or section of an aircraft.

Further, composite layup **104** in **Figure 1** may also be used to rework sections on platforms other than aircraft. For example, without limitation, composite layup **104** may be used to rework a portion of a capsule for a spacecraft, a portion of a wing for a space shuttle, a base for a satellite, and/or some other section for a different type of platform.

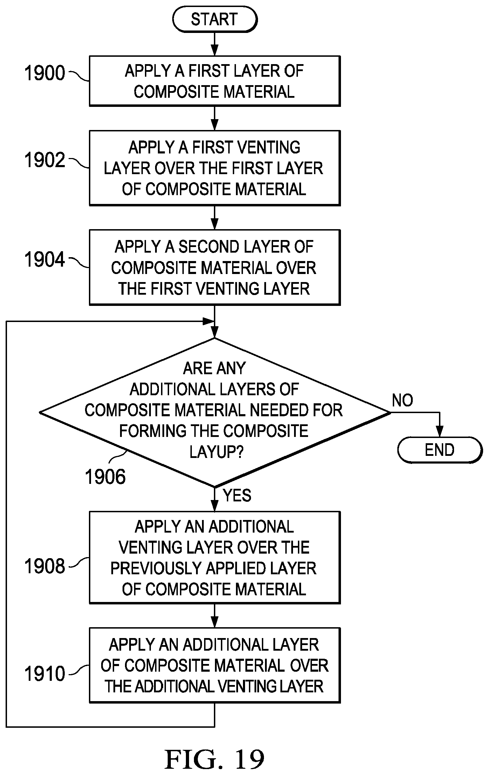

With reference now to **Figure 19****,** an illustration of a flowchart of a process for reducing porosity in a composite structure is depicted in accordance with an illustrative embodiment. The process illustrated in **Figure 19** may be implemented to reduce porosity **168** in composite structure **102** formed using composite layup **104** in **Figure 1****.**

The process may begin by applying first layer of composite material **152** (operation **1900).** The process may then apply first venting layer **158** over first layer of composite material **152** (operation **1902**). Next, the process may apply second layer of composite material **154** over first venting layer **158** (operation **1904**).

Thereafter, the process may determine whether any additional layers of composite material are needed for forming composite layup **104** (operation **1906).** If additional layers of composite material are not needed for composite layup **104,** the process may terminate.

Otherwise, if additional layers of composite material are needed, the process may then apply additional venting layer **162** over previously applied layer of composite material **163** (operation **1908**). When additional venting layer **162** is the first additional venting layer to be applied after first venting layer **158,** previously applied layer of composite material **163** may be second layer of composite material **154.**

Next, the process may apply additional layer of composite material **164** over additional venting layer **162** (operation **1910**). The process may then return to operation **1906** as described above. When the process described in **Figure 19** has been completed, composite layup **104** that is formed may be cured. Depending on the implementation, other layers may be applied over composite layup **104** prior to curing.

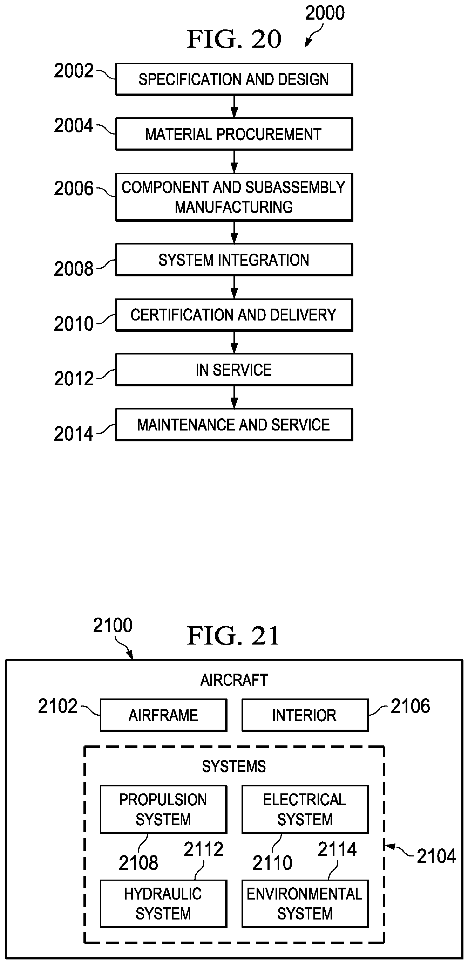

Illustrative embodiments of the present disclosure may be described in the context of aircraft manufacturing and service method **2000** as shown in **Figure 20** and aircraft **2100** as shown in **Figure 21****.** Turning first to **Figure 20****,** an illustration of an aircraft manufacturing and service method is depicted in accordance with an illustrative embodiment. During pre-production, aircraft manufacturing and service method **2000** may include specification and design **2002** of aircraft **2100** in **Figure 21** and material procurement **2004.**

During production, component and subassembly manufacturing **2006** and system integration **2008** of aircraft **2100** in **Figure 21** may take place. Thereafter, aircraft **2100** may go through certification and delivery **2010** in order to be placed in service **2012.** While in service **2012** by a customer, aircraft **2100** may be scheduled for routine maintenance and service **2014,** which may include modification, reconfiguration, refurbishment, and other maintenance or service.

Each of the processes of aircraft manufacturing and service method **2000** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 21****,** an illustration of an aircraft is depicted in which an illustrative embodiment may be implemented. In this example, aircraft **2100** may be produced by aircraft manufacturing and service method **2000** in **Figure 20** and may include airframe **2102** with plurality of systems **2104** and interior **2106.** Examples of systems **2104** may include one or more of propulsion system **2108,** electrical system **2110,** hydraulic system **2112,** and environmental system **2114.** Any number of other systems may be included.

One or more of devices and parts for any one of systems **2104,** including one or more of propulsion system **2108,** electrical system **2110,** hydraulic system **2112,** environmental system **2114,** and other systems, may be implemented using a composite structure, such as composite structure **102** formed using composite layup **104** in **Figure 1****.**

Composite layup **104** and/or composite structure **102** formed using composite layup **104** in **Figure 1** may be formed during one or more of the stages of aircraft manufacturing and service method **2000** in **Figure 20****.** For example, without limitation, composite layup **104** may be laid up and/or cured to form composite structure **102** in **Figure 1** during material procurement **2004,** component and subassembly manufacturing **2006,** system integration **2008,** routine maintenance and service **2014,** and/or other stages in aircraft manufacturing and service method **2000.** In some cases, composite layup **104** may be used to rework a structure on aircraft **2100** while aircraft **2100** is in service **2012.**

In this manner, one or more apparatus embodiments and/or method embodiments for forming composite structure **102** having reduced porosity **168** in **Figure 1** may be utilized during production stages and/or maintenance stages for an aircraft, such as aircraft **2100** in **Figure 21****.** The use of a number of the different illustrative embodiments may substantially expedite the assembly of and/or reduce the cost of aircraft **2100.** Further, one or more of the different illustrative embodiments may increase a strength and/or durability for aircraft **2100** in **Figure 21****.**

Although an aerospace example is shown, the different illustrative embodiments may be applied to a spacecraft.

Thus, the different illustrative embodiments provide a method for reducing porosity in a composite structure.

## Claims

1. A method for reducing porosity (168) in a composite structure (102), the method comprising:
applying a first layer of composite material (152) over a surface (153), wherein surface (153) is one or more of a wing, a fuselage, a spacecraft;
applying a venting layer over the first layer of composite material (152), wherein the venting layer is formed by fibers (145) arranged in the form of a woven fabric and includes at least one of positioning fabric (144), fiberglass layer (146), Buckypaper (148), a nanomaterial layer (150), a nylon layer, and a polyester fiber layer; and
applying a second layer of composite material (154) over the venting layer in which the first layer of composite material (152), the venting layer, and the second layer of composite material (154) form a composite layup (104) for the composite structure (102),
wherein the venting layer provides a number of pathways (130) for allowing a number of fluids (132) to escape out of the composite layup (104) during curing of the composite layup (104), and
wherein edges (408) of the venting layer extend past first edges (604) of the first layer of composite material (152) and second edges (706) of the second layer of composite material (154) and wherein a pathway in the number of pathways (130) extends from one edge of the edges (408) of the venting layer to another edge of the edges (408) of the venting layer to allow the number of fluids (132) to escape out of the composite layup (104) during curing of the composite layup (104).

2. The method of claim 1 further comprising:
applying an additional venting layer (162) over a previously applied layer of composite material (163);
applying an additional layer of composite material (164) over the additional venting layer (162); and
repeating the steps of applying the additional venting layer (162) over the previously applied layer of composite material (163) and applying the additional layer of composite material (164) over the additional venting layer (162) until a selected number of layers of composite material (120) have been laid up to form the composite layup (104).

3. The method of either claim 1 or claim 2, wherein the venting layer is a first venting layer (158) and further comprising:
applying a second venting layer (160) over the second layer of composite material (154); and
applying a third layer of composite material (156) over the second venting layer (160) in which the first layer of composite material (152), the first venting layer (158), the second layer of composite material (154), the second venting layer (160), and the third layer of composite material (156) form the composite layup (104) for the composite structure (102) and in which the first venting layer (158) and the second venting layer (160) are configured to reduce the porosity (168) of the composite structure (102).

4. The method of claim 1, wherein the number of fluids (132) includes at least one of air (136), moisture (142), a chemical (138), and a volatile gas (140).

5. The method of any preceding claim further comprising:
curing the composite layup (104) to form the composite structure (102), wherein a number of fluids (132) escapes through a number of pathways (130) formed by the venting layer during curing of the composite layup (104) such that the porosity (168) in the composite structure (102) is reduced.

6. The method of any preceding claim further comprising:
curing partially the composite layup (104) to form a partially cured composite layup; placing the partially cured composite layup at a rework location; and
curing fully the partially cured composite layup to form the composite structure (102), wherein the composite structure is a composite patch (103).

## Patentansprüche

1. Verfahren zum Verringern der Porosität (168) in einer Verbundstruktur (102), wobei das Verfahren umfasst:
Aufbringen einer ersten Schicht eines Verbundmaterials (152) über einer Oberfläche (153), wobei die Oberfläche (153) ein Flügel, ein Rumpf oder ein Raumfahrzeug ist;
Aufbringen einer Entlüftungsschicht über der ersten Schicht aus Verbundmaterial (152), wobei die Entlüftungsschicht durch Fasern (145) gebildet wird, die in der Form eines Gewebes angeordnet sind, und mindestens eines von Positionierungsgewebe (144), einer Glasfaserschicht (146), Buckypapier (148), einer Nanomaterialschicht (150), einer Nylonschicht und einer Polyesterfaserschicht umfasst; und
Aufbringen einer zweiten Schicht aus Verbundmaterial (154) über der Entlüftungsschicht, wobei die erste Schicht aus Verbundmaterial (152), die Entlüftungsschicht und die zweite Schicht aus Verbundmaterial (154) eine Verbundschichtung (104) für die Verbundstruktur (102) bilden,
wobei die Entlüftungsschicht eine Anzahl von Pfaden (130) bereitstellt, die es einer Anzahl von Fluiden (132) ermöglichen, während des Aushärtens der Verbundschichtung (104) aus der Verbundschichtung (104) zu entweichen, und
wobei Ränder (408) der Entlüftungsschicht sich über erste Ränder (604) der ersten Schicht aus Verbundmaterial (152) und zweite Ränder (706) der zweiten Schicht aus Verbundmaterial (154) hinaus erstrecken, und wobei sich ein Pfad aus der Anzahl von Pfaden (130) von einem der Ränder (408) der Entlüftungsschicht zu einem anderen der Ränder (408) der Entlüftungsschicht erstreckt, um es der Anzahl von Fluiden (132) zu ermöglichen, während des Aushärtens der Verbundschichtung (104) aus der Verbundschichtung (104) zu entweichen.

2. Verfahren nach Anspruch 1, ferner umfassend:
Aufbringen einer zusätzlichen Entlüftungsschicht (162) über einer zuvor aufgebrachten Schicht aus Verbundmaterial (163);
Aufbringen einer zusätzlichen Schicht aus Verbundmaterial (164) über der zusätzlichen Entlüftungsschicht (162); und
Wiederholen der Schritte des Auftragens der zusätzlichen Entlüftungsschicht (162) über der zuvor aufgetragenen Schicht aus Verbundmaterial (163) und des Auftragens der zusätzlichen Schicht aus Verbundmaterial (164) über der zusätzlichen Entlüftungsschicht (162), bis eine zum Bilden der Verbundschichtung (104) ausgewählte Anzahl von Schichten aus Verbundmaterial (120) aufgelegt worden ist.

3. Verfahren nach Anspruch 1 oder 2, bei dem die Entlüftungsschicht eine erste Entlüftungsschicht (158) ist, und ferner umfassend:
Aufbringen einer zweiten Entlüftungsschicht (160) über der zweiten Schicht aus Verbundmaterial (154); und
Aufbringen einer dritten Schicht aus Verbundmaterial (156) über der zweiten Entlüftungsschicht (160), wobei die erste Schicht aus Verbundmaterial (152), die erste Entlüftungsschicht (158), die zweite Schicht aus Verbundmaterial (154), die zweite Entlüftungsschicht (160) und die dritte Schicht aus Verbundmaterial (156) die Verbundschichtung (104) für die Verbundstruktur (102) bilden, und bei dem die erste Entlüftungsschicht (158) und die zweite Entlüftungsschicht (160) konfiguriert sind, um die Porosität (168) der Verbundstruktur (102) zu reduzieren.

4. Verfahren nach Anspruch 1, bei dem die Anzahl von Fluiden (132) mindestens eines von Luft (136), Feuchtigkeit (142), einer Chemikalie (138) und einem flüchtigen Gas (140) umfasst.

5. Verfahren nach einem der vorhergehenden Ansprüche, ferner umfassend:
Härten der Verbundschichtung (104), um die Verbundstruktur (102) zu bilden, wobei während des Härtens der Verbundschichtung (104) eine Anzahl von Fluiden (132) über eine Anzahl von von der Entlüftungsschicht gebildeten Wegen (130) entweicht, so dass die Porosität (168) in der Verbundstruktur (102) verringert wird.

6. Verfahren nach einem der vorhergehenden Ansprüche, ferner umfassend:
teilweises Aushärten der Verbundschichtung (104), um eine teilweise ausgehärtete Verbundschichtung zu bilden;
Anordnen der teilweise gehärteten Verbundschichtung an einer Überarbeitungsstelle; und
vollständiges Aushärten der teilweise ausgehärteten Verbundschichtung, um die Verbundstruktur (102) zu bilden,
wobei die Verbundstruktur ein Verbundpatch (103) ist.

## Revendications

1. Procédé pour réduire une porosité (168) dans une structure composite (102), le procédé comprenant les étapes consistant à :
appliquer une première couche de matériau composite (152) sur une surface (153), dans lequel la surface (153) est l'un ou plusieurs parmi une aile, un fuselage, un vaisseau spatial ;
appliquer une couche de ventilation sur la première couche de matériau composite (152), dans lequel la couche de ventilation est formée par des fibres (145) disposées sous la forme d'un tissu tissé et comprend au moins l'un parmi un tissu de positionnement (144), une couche de fibres de verre (146), une feuille de nanotubes (Buckypaper) (148), une couche de nanomatériau (150), une couche de nylon, et une couche de fibres de polyester ; et
appliquer une deuxième couche de matériau composite (154) sur la couche de ventilation dans laquelle la première couche de matériau composite (152), la couche de ventilation, et la deuxième couche de matériau composite (154) forment une superposition composite (104) pour la structure composite (102),
dans lequel la couche de ventilation fournit un nombre de passages (130) pour permettre à un nombre de fluides (132) de s'échapper hors de la superposition composite (104) pendant le durcissement de la superposition composite (104), et
dans lequel des bords (408) de la couche de ventilation s'étendent au-delà de premiers bords (604) de la première couche de matériau composite (152) et de seconds bords (706) de la deuxième couche de matériau composite (154) et dans lequel un passage parmi le nombre de passages (130) s'étend depuis un bord des bords (408) de la couche de ventilation jusqu'à un autre bord des bords (408) de la couche de ventilation pour permettre au nombre de fluides (132) de s'échapper hors de la superposition composite (104) pendant le durcissement de la superposition composite (104).

2. Procédé selon la revendication 1, comprenant en outre les étapes consistant à :
appliquer une couche de ventilation supplémentaire (162) sur une couche de matériau composite (163) précédemment appliquée ;
appliquer une couche supplémentaire de matériau composite (164) sur la couche de ventilation supplémentaire (162) ; et
répéter les étapes d'application de la couche de ventilation supplémentaire (162) sur la couche de matériau composite (163) précédemment appliquée et appliquer la couche supplémentaire de matériau composite (164) sur la couche de ventilation supplémentaire (162) jusqu'à ce qu'un nombre sélectionné de couches de matériau composite (120) ait été déposé pour former la superposition composite (104).

3. Procédé selon la revendication 1 ou la revendication 2, dans lequel la couche de ventilation est une première couche de ventilation (158) et comprenant en outre :
l'application d'une deuxième couche de ventilation (160) sur la deuxième couche de matériau composite (154) ; et
appliquer une troisième couche de matériau composite (156) sur la deuxième couche de ventilation (160) dans laquelle la première couche de matériau composite (152), la première couche de ventilation (158), la deuxième couche de matériau composite (154), la deuxième couche de ventilation (160), et la troisième couche de matériau composite (156) forment la superposition composite (104) pour la structure composite (102) et dans lequel la première couche de ventilation (158) et la deuxième couche de ventilation (160) sont configurées pour réduire la porosité (168) de la structure composite (102).

4. Procédé selon la revendication 1, dans lequel le nombre de fluides (132) comprend au moins l'un parmi de l'air (136), de l'humidité (142), un produit chimique (138), et un gaz volatile (140).

5. Procédé selon l'une quelconque des revendications précédentes comprenant en outre :
le durcissement de la superposition composite (104) pour former la structure composite (102), dans lequel un nombre de fluides (132) s'échappe à travers un nombre de passages (130) formés par la couche de ventilation pendant le durcissement de la superposition composite (104) de telle sorte que la porosité (168) de la structure composite (102) est réduite.

6. Procédé selon l'une quelconque des revendications précédentes, comprenant en outre :
le durcissement partiel de la superposition composite (104) pour former une superposition composite partiellement durcie ;
la mise en place de la superposition composite partiellement durcie à un emplacement de restructuration ; et
le durcissement complet de la superposition composite partiellement durcie pour former la structure composite (102), la structure composite étant un patch composite (103).
